(19) Europäisches Patentamt / European Patent Office / Office européen des brevets

(11) **EP 4 311 599 A1**

(12) **EUROPEAN PATENT APPLICATION**

(43) Date of publication:
**31.01.2024 Bulletin 2024/05**

(21) Application number: **22386052.9**

(22) Date of filing: **29.07.2022**

(51) International Patent Classification (IPC):
**B01J 20/10** (2006.01)   **B01J 20/12** (2006.01)
**B01J 20/14** (2006.01)   **B01J 20/24** (2006.01)
**B01J 20/26** (2006.01)   **B01J 20/28** (2006.01)
**B01J 20/30** (2006.01)

(52) Cooperative Patent Classification (CPC):
**B01J 20/12; A23K 20/105; A23K 20/26;
A23K 20/28; A23K 40/10; B01J 20/106;
B01J 20/14; B01J 20/24; B01J 20/261;
B01J 20/262; B01J 20/264; B01J 20/267;
B01J 20/28004; B01J 20/28016; B01J 20/2803;**

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ImerTech SAS
75015 Paris (FR)**

(72) Inventors:
• **Riley, Andy
St Columb Major, Cornwall TR9 6BQ (GB)**

• **Casarin, Simon
31200 Toulouse (FR)**
• **Laboulfie, Fabien
31130 Balma (FR)**
• **Ipsilanti, Eleni
15238 Halandri (GR)**

(74) Representative: **Haseltine Lake Kempner LLP
One Portwall Square
Portwall Lane
Bristol BS1 6BH (GB)**

(54) **GRANULATE OF AT LEAST ONE OF EXPANDED MILLED PERLITE, DIATOMACEOUS EARTH AND SEPIOLITE AS AN ABSORBENT**

(57) A granulate comprising a binder and at least one of expanded milled perlite particles, diatomaceous earth particles, and sepiolite particles; wherein the particles are bound together by the binder forming pores between the particles; and the granulate has a $D_{50}$ from about 150 to about 2000 microns.

EP 4 311 599 A1

**(Cont. next page)**

(52) Cooperative Patent Classification (CPC): (Cont.)
**B01J 20/28054; B01J 20/3028; B01J 20/3042;
B01J 20/3078**

**Description**

**TECHNICAL FIELD**

The present disclosure concerns a granulate comprising a binder and at least one of expanded milled perlite particles, diatomaceous earth particles, and sepiolite particles, methods for preparing granulate materials, absorbent materials comprising granulate materials, animal feed compositions comprising granulate materials and methods for treating fluid spills using granulate materials.

**BACKGROUND**

Perlite is a naturally-occurring amorphous volcanic glass which has a relatively-high water content. When heated rapidly, the water tuns to steam and expands the glass to form a foamed structure. The lightweight expanded perlite foamed structures are milled and classified to suit a wide variety of applications.

Expanded milled perlite is commonly used as a lightweight absorbent material in applications which require absorption of liquids of interest. Expanded milled perlite is already used as a carrier in animal feed to absorb liquid nutrients. Additionally, expanded perlite is an ideal medium for cleaning fluid spills.

Diatomaceous earth products are obtained from diatomaceous earth (also called "DE" or "diatomite"), which is generally known as a sediment enriched in biogenic silica (silica produced or brought about by living organisms) in the form of siliceous skeletons (frustules) of diatoms. Diatoms are a diverse array of microscopic, single-celled, goldenbrown algae generally of the class Bacillariophyceae that possess an ornate siliceous skeleton of varied and intricate structures comprising two valves that, in the living diatom, fit together much like a pill box. Diatomaceous earth may form from the remains of waterborne diatoms and, therefore, diatomaceous earth deposits may be found close to either current or former bodies of water. Those deposits are generally divided into two categories based upon source: freshwater and saltwater.

Sepiolite is a fibrous hydrated magnesium silicate that is opaque and white, grey or cream in colour. This light, porous clay is said to resemble sea foam. Sepiolite, like milled perlite, is known to have good adsorption properties and is an abundantly available material.

It would be desirable to produce a granulate product which comprises a binder and at least one of expanded milled perlite particles, diatomaceous earth particles, and sepiolite particles, which has improved absorption capacity, flowability that remains constant as the liquid incorporation is increased and reduced dust levels when compared to typically used expanded perlite.

**SUMMARY**

According to a first aspect, there is provided a granulate comprising a binder and at least one of expanded milled perlite particles, diatomaceous earth particles, and sepiolite particles, wherein:

i) the expanded milled perlite particles have a $D_{50}$ from about 5 to about 40 microns;
ii) the diatomaceous earth particles have a $D_{50}$ from about 5 to about 40 microns;
iii) the sepiolite particles have a $D_{50}$ from about 5 to about 100 microns;
iv) the granulate has a $D_{50}$ from about 150 to about 2000 microns; and

wherein the particles are bound together by the binder forming pores between the particles.

According to a second aspect, there is provided an absorbent material comprising a granulate according to the first aspect.

According to a third aspect, there is provided a method for treating fluid spills comprising applying the absorbent material according to the second aspect to the fluid spill so that the fluid is absorbed by the absorbent material.

According to a fourth aspect, there is provided an animal feed composition comprising the granulate according to the first aspect.

According to a fifth aspect, there is provided a method of preparing the granulate according to the first aspect comprising spray drying the milled expanded perlite particles with a binder and performing a curing step.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

**FIGURES**

Embodiments will now be described by way of example only, with reference to the Figures, in which:

**Figure 1** is a graph showing the impact of absorption on the flowability of powder samples prepared according to the present invention compared with comparative examples.

**Figure 2** includes SEM images showing various milled expanded perlite granulates formed according to the present invention.

**DETAILED DESCRIPTION OF THE INVENTION**

It has been surprisingly found that granulating at least one of expanded milled perlite, diatomaceous earth, and sepiolite using a binder results in a product with high absorption rate, constant flowability and minimal dust levels.

_Expanded milled perlite particles_

Perlite typically contains the following components: silicon dioxide, aluminium oxide, sodium oxide, potassium oxide, iron oxide, magnesium oxide, calcium oxide, water and small amounts of other metallic elements.

The perlite particles of the present invention are in the form of expanded perlite. Typically, expanded perlite includes one or more cells, or parts of cells, in which a cell is a void space partially or entirely surrounded by walls of glass, usually formed from expansion of gases when the glass is in the softened state. Processes for expanding perlite may include heating perlite in air to a temperature of least about 700 °C, typically between 800 °C and 1100 °C, in an expansion furnace. Exemplary processes for producing expanded perlite are described in US 2006/0075930, the entire contents of which is hereby incorporated by reference. Expanded perlite typically has a bulk volume up to 20 times that of the unexpanded material.

In accordance with the present invention, the perlite is milled after it has been expanded in the expansion furnace.

Unless otherwise specified, the particle size properties referred to herein for the expanded milled perlite particles are as measured by the method employed in the art of laser light scattering, using a CILAS 1064L particle size analyser, as supplied by CILAS (or by other methods which give essentially the same result). In the laser light scattering technique, the size of particles in powders, suspensions and emulsions may be measured using the diffraction of a laser beam, based on an application of Fraunhofer and Mie theory. Such a machine provides measurements and a plot of the cumulative percentage by volume of particles having a size, referred to in the art as the 'equivalent spherical diameter' (e.s.d), less than given e.s.d values. The mean particle size $d_{50}$ is the value determined in this way of the particle e.s.d at which there are 50% by volume of the particles which have an equivalent spherical diameter less than that $d_{50}$ value.

According to the present invention, the expanded milled perlite particles have a $d_{50}$ from about 5 to about 40 microns, such as from about 10 to about 35 microns, or from about 15 to about 30 microns, or from about 20 to about 25 microns.

In certain embodiments, the expanded milled perlite particles have a bulk density of from about 0.05 $g/cm^3$ to about 0.20 $g/cm^3$, such as from about 0.06 $g/cm^3$ to about 0.19 $g/cm^3$, such as from about 0.07 $g/cm^3$ to about 0.18 $g/cm^3$, such as from about 0.08 $g/cm^3$ to about 0.17 $g/cm^3$, such as from about 0.09 $g/cm^3$ to about 0.16 $g/cm^3$, such as such as from about 0.10 $g/cm^3$ to about 0.15 $g/cm^3$, such as from about 0.11 $g/cm^3$ to about 0.14 $g/cm^3$, such as from about 0.12 $g/cm^3$ to about 0.13 $g/cm^3$.

_Diatomaceous earth particles_

Unless otherwise specified, the particle size properties referred to herein for the diatomaceous earth particles are as measured by the method employed in the art of laser light scattering, using a CILAS 1064L particle size analyser, as supplied by CILAS (or by other methods which give essentially the same result). In the laser light scattering technique, the size of particles in powders, suspensions and emulsions may be measured using the diffraction of a laser beam, based on an application of Fraunhofer and Mie theory. Such a machine provides measurements and a plot of the cumulative percentage by volume of particles having a size, referred to in the art as the 'equivalent spherical diameter' (e.s.d), less than given e.s.d values. The mean particle size $d_{50}$ is the value determined in this way of the particle e.s.d at which there are 50% by volume of the particles which have an equivalent spherical diameter less than that $d_{50}$ value.

According to the present invention, the diatomaceous earth particles have a $d_{50}$ from about 5 to about 40 microns, such as from about 10 to about 35 microns, or from about 15 to about 30 microns, or from about 20 to about 25 microns.

In certain embodiments, the diatomaceous earth particles have a bulk density of from about 0.05 $g/cm^3$ to about

0.20 g/cm$^3$, such as from about 0.06 g/cm$^3$ to about 0.19 g/cm$^3$, such as from about 0.07 g/cm$^3$ to about 0.18 g/cm$^3$, such as from about 0.08 g/cm$^3$ to about 0.17 g/cm$^3$, such as from about 0.09 g/cm$^3$ to about 0.16 g/cm$^3$, such as such as from about 0.10 g/cm$^3$ to about 0.15 g/cm$^3$, such as from about 0.11 g/cm$^3$ to about 0.14 g/cm$^3$, such as from about 0.12 g/cm$^3$ to about 0.13 g/cm$^3$.

*Sepiolite particles*

Sepiolite is a naturally occurring clay mineral. It is a hydrous magnesium silicate which is lightweight, non-swelling and porous.

The particle size properties referred to herein for the sepiolite particles are as measured by the method employed in the art of laser light scattering, using a CILAS 1064L particle size analyser, as supplied by CILAS (or by other methods which give essentially the same result). In the laser light scattering technique, the size of particles in powders, suspensions and emulsions may be measured using the diffraction of a laser beam, based on an application of Fraunhofer and Mie theory. Such a machine provides measurements and a plot of the cumulative percentage by volume of particles having a size, referred to in the art as the 'equivalent spherical diameter' (e.s.d), less than given e.s.d values. The mean particle size $d_{50}$ is the value determined in this way of the particle e.s.d at which there are 50% by volume of the particles which have an equivalent spherical diameter less than that dso value.

According to the present invention, the sepiolite particles have a $d_{50}$ from about 5 to about 100 microns, such as from about 10 to about 90 microns, or from about 20 to about 80 microns, or from about 30 to about 70 microns, or from about 40 to about 60 microns, from about 10 to about 50 microns, or from about 20 to 40 microns.

In certain embodiments, the sepiolite particles have a bulk density of from about 0.05 g/cm$^3$ to about 0.30 g/cm$^3$, such as from about 0.06 g/cm$^3$ to about 0.19 g/cm$^3$, such as from about 0.07 g/cm$^3$ to about 0.18 g/cm$^3$, such as from about 0.08 g/cm$^3$ to about 0.17 g/cm$^3$, such as from about 0.09 g/cm$^3$ to about 0.16 g/cm$^3$, such as such as from about 0.10 g/cm$^3$ to about 0.15 g/cm$^3$, such as from about 0.11 g/cm$^3$ to about 0.14 g/cm$^3$, such as from about 0.12 g/cm$^3$ to about 0.13 g/cm$^3$.

*Granulate*

According to the present invention at least one of the expanded milled perlite particles, the diatomaceous earth particles, and the sepiolite particles are bound together using a binder to form a granulate. Granulation is the act or process in which primary powder particles are adhered to form larger, multiparticle entities called granules or granulates.

In certain embodiments, the granulate comprises or consists of or consists essentially of expanded milled perlite particles, and a binder. In certain embodiments, the granulate comprises or consists of or consists essentially of diatomaceous earth particles, and a binder. In certain embodiments, the granulate comprises or consists of or consists essentially of sepiolite particles, and a binder. In certain embodiments, the granulate comprises or consists of or consists essentially of a blend of expanded milled perlite particles and diatomaceous earth particles, and a binder. In certain embodiments, the granulate comprises or consists of or consists essentially of a blend of expanded milled perlite particles and sepiolite particles, and a binder. In certain embodiments, the granulate comprises or consists of or consists essentially of a blend of diatomaceous earth particles and sepiolite particles, and a binder. In certain embodiments, the granulate comprises or consists of or consists essentially of a blend of expanded milled perlite particles, diatomaceous earth particles and sepiolite particles, and a binder.

At least one of the expanded milled perlite particles, diatomaceous earth particles, and sepiolite particles are bound together by the binder forming pores or otherwise known as interstitial void spaces between the particles. In some embodiments, the pores have a measurable pore size, which is explained in the experimental section below. In certain embodiments, the median pore size is from about 1 g/cm$^3$ to about 6 g/cm$^3$, or about 1.1 g/cm$^3$, or about 1.2 g/cm$^3$, or about 1.3 g/cm$^3$, or about 1.4 g/cm$^3$, or about 1.5 g/cm$^3$, or about 1.6 g/cm$^3$, or about 1.7 g/cm$^3$, or about 1.8 g/cm$^3$, or about 1.9 g/m$^3$, or about 2.0 g/m$^3$.

According to the present invention, the granulate has a $d_{50}$, by laser diffraction method (as described above) of from about 150 to about 2000 microns, for example, of from about 200 microns to about 1900 microns, or from about 300 microns to about 1800 microns, or from about 400 microns to about 1700 microns or from about 500 microns to about 1600 microns, or from about 600 microns to about 1500 microns, or from about 700 microns to about 1400 microns, or from about 800 microns to about 1300 microns, or from about 900 microns to about 1200 microns, or from about 1000 microns to about 1100 microns, or from about 200 microns to about 600 microns, such as from about 350 microns to about 550 microns, or from about 400 microns to about 500 microns, or from about 600 microns to about 1900 microns, such as from about 700 microns to about 1800 microns, or from about 800 microns to about 1600 microns, or from about 900 microns to about 1500 microns, or from about 1000 microns to about 1400 microns, or from about 1100 microns to about 1300 microns. The granulate may have a $d_{50}$, by laser of from about 200 microns to about 1000 microns, or from about 300 microns to about 900 microns, or from about 400 microns to about 800 microns, or from about 500 microns to about 700 microns.

In certain embodiments, the granulate has a bulk density of from about 0.1 g/cm$^3$ to about 0.50 g/cm$^3$, such as from about 0.15 g/cm$^3$ to about 0.45 g/cm$^3$, such as from about 0.20 g/cm$^3$ to about 0.40 g/cm$^3$, such as from about 0.20 g/cm$^3$ to about 0.35 g/cm$^3$, such as from about 0.25 g/cm$^3$ to about 0.30 g/cm$^3$.

The granulate of the present invention may have a measurable BET surface area. BET specific surface area refers to the area of the surface of the particles of the granulate particulate with respect to unit mass, determined according to the BET method by the quantity of nitrogen adsorbed on the surface of said particles so as to form a monomolecular layer completely covering said surface (measurement according to the BET method, AFNOR standard X11-621 and 622 or ISO 9277). Details of the BET specific surface area measurement method used in the preparation of the present application are set out in the Examples.

The granulate may have a BET specific surface area no less than about 1.5 m$^2$/g, for example, no less than about 1.6 m$^2$/g, or no less than about 1.7 m$^2$/g, or no less than about 1.8 m$^2$/g, or no less than about 1.9 m$^2$/g, or no less than about 2.0 m$^2$/g, or no less than about 2.5 m$^2$/g, or no less than about 3.0 m$^2$/g, or no less than about 5.0 m$^2$/g, or no less than about 10 m$^2$/g (e.g. 10.0 m$^2$/g), or no less than about 20 m$^2$/g (e.g. 11.0 m$^2$/g). The granulate may have a BET specific surface area no greater than about 50 m$^2$/g (e.g. 50.0 m$^2$/g), for example, no greater than about 40 m$^2$/g (e.g. 40.0 m$^2$/g), or no greater than about 30 m$^2$/g, (e.g. 30.0 m$^2$/g) or no greater than about 20 m$^2$/g (e.g. 20.0 m$^2$/g), or no greater than about 15 m$^2$/g (e.g. 15.0 m$^2$/g), or no greater than about 12 m$^2$/g (e.g. 12.0 m$^2$/g), or no greater than about 11 m$^2$/g (e.g. 11.0 m$^2$/g), or no greater than about 10 m$^2$/g (e.g. 10.0 m$^2$/g), or no greater than about 8.0 m$^2$/g, or no greater than about 7.0 m$^2$/g, or no greater than about 6.0 m$^2$/g. The granulate may have a BET specific surface area may be from about 1.5 m$^2$/g to about 50 m$^2$/g (e.g., 50.0 m$^2$/g), for example, from about 2 m$^2$/g to about 40 m$^2$/g (e.g. 40.0 m$^2$/g), or from about 5 m$^2$/g to about 30 m$^2$/g (e.g. 30.0 m$^2$/g), or from about 10 m$^2$/g to about 20 m$^2$/g (e.g. 20.0 m$^2$/g).

In certain embodiments, the granulate has an angle of repose up to about 38°, as measured by the angle of repose (funnel method) using the EFT-01 Powder Flow Tester; the granulate has an absorption capacity of at least 150%, as measured using the Westinghouse method described herein in the experimental section and utilizing dioctyladipate as the absorbate; and a dust content less than 10, as measured by the Dust analyzer DustmonRD 100.

The angle of repose of a granular material is the steepest angle of decent or dip relative to the horizontal plane to which a material can be piled without slumping. The morphology of the material affects the angle of repose. When bulk granular materials are poured onto a horizontal surface, a conical pile will form. The internal angle between the surface of the pile and the horizontal surface is known as the angle of repose and is related to the density, surface area and shapes of the particles, and the coefficient of friction of the material. Material with a low angle of repose forms flatter piles than material with a high angle of repose. Thus, smooth rounded sand grains cannot be piled as steeply as rough interlocking sands. The method for calculating the angle of repose is described in more detail below in the experimental section.

In certain embodiments the angle of repose (of the dry product) is up to about 38°, such as up to 37°, such as up to 36°, such as up to 35°, such as up to 34°, such as up to 33°, such as up to 32°, such as up to 31°, such as up to 30°.

In certain embodiments the granulate has an advantageously low dust content (measured using the Dust Analyzer Dustmon RD 100 (available from Retsch®)) of less than 10, such as less than 9, or 8. The method for calculating the dust content value is explained in more detail in the experimental section.

Expanded milled perlite, diatomaceous earth and sepiolite are already known for their ability to hold water and for a strong water absorption capacity. This absorption capacity is increased further by granulation of at least one of the expanded milled perlite particles, the diatomaceous earth particles, and the sepiolite particles, with a binder.

In certain embodiments, the granulate of the present invention has an absorption capacity of at least 150% (calculated as 100 x (weight of the absorbate/weight of the composition)) as measured using the Westinghouse method as described herein in the experimental section. In certain embodiments, the granulate has an absorption capacity of at least 200%, such as at least 250%, such as at least 300%, such as at least 350%, such as at least 400%, such as at least 450%, such as at least 500%.

*Binder*

According to the present invention at least one of the expanded milled perlite particles, the diatomaceous earth particles, and sepiolite particles are bound together using a binder to form a granulate.

In certain embodiments, the binder is a polymer, bentonite or lignosulphonate.

In certain embodiments, the binder is a polymer.

In certain embodiments, the binder consists of a single type of polymer, or in certain embodiments the binder comprises one or more polymers.

In certain embodiments, the polymer is selected from one or more of a water-soluble synthetic polymer, a natural water-soluble polymer and a polyol. In certain embodiments, the polymer is a combinations of these types of polymers.

In certain embodiments the binder comprises or consists of a water-soluble synthetic polymer selected from, for example, polyvinyl alcohol (PVA), polyethylene glycol, urea formaldehyde, polyacrylamide, microcrystalline cellulose, polyacrylates, acrylic/maleic copolymers and polyvinylpyrrolidone.

In certain embodiments, the binder comprises or consists of natural water-soluble polymers, for example, xanthan gum, sodium alginate, potassium alginate, lignosulfonate, locust bean gum, pectin, dextran, carrageenan, agar, xanthan gum, guar gum, Arabic gum (acacia), cellulose ethers such as methyl cellulose and ethyl cellulose, starch or starch-based derivatives.

In certain embodiments, the binder comprises or consists of a polyol. By the term "polyol" we mean an organic compound containing multiple hydroxyl groups. The polyol may be a low molecular weight polyol such as glycerol or pentaerythritol. Alternatively, the polyol may be a sugar alcohol which a class of low molecular weight polyols which are obtained by the hydrogenation of sugars, for example, erythritol, hydrogenated starch hydrolysates, isomalt, lactitol, maltitol, mannitol, sorbitol and xylitol. Derivatives of polyols are also intended to be included in this definition, for example, sorbitan monolaurate which is a mixture of esters formed from the fatty acid lauric acid and polyols derived from sorbitol.

In certain embodiments, the binder is selected from polyvinyl alcohol, sodium alginate, potassium alginate, lignosulphonate, urea-formaldehyde, agar, carrageenan, guar gum, cassia gum, xantham gum, cellulose, arabic gum (acacia), microcrystalline cellulose, methyl cellulose, ethyl cellulose, sorbitan monolaurate, starch or starch-based derivatives, bentonite and combinations thereof.

In certain embodiments, the binder comprises or consists of polyvinyl alcohol, preferably having a molecular weight greater than about 90,000 g/mol, or greater than about 100,000 g/mol, or greater than about 120,000 g/mol, or greater than about 150,000 g/mol.

In certain embodiments, the binder is a cross-linked binder which is a reaction product of a polymer and a cross-linking agent. Cross-linking is the formation of chemical links between polymer chains to form a three-dimensional network of connected molecules. The polymer may be selected from the list of polymers described above. Cross-linking agents are well-known in the art and may be selected depending on the type of polymer.

In certain embodiments, the cross-linking agent is an acid selected from one or more of the following:

(i) dicarboxylic acids, including oxalic acid, malonic acid, succinic acid, glutaric acid, adipic acid, pimelic acid. Suberic acid, azelaic acid, sebacic acid, malic acid, tartaric acid, tartronic acid, aspartic acid, glutamic acid, fumaric acid, itaconic acid, maleic acid, traumatic acid, camphoric acid, phthalic acid and its derivatives that contain at least one boron or chlorine atom, tetrahydrophthalic acid and its derivatives that contain at least one chlorine atom, isophthalic acid, terephthalic acid, mesaconic acid and citraconic acid,
(ii) tricarboxylic acids, including citric acid, tricarballylic acid, 1,2,4-butanetricarboxylic acid, aconitic acid, hemimellitic acid, trimellitic acid and trimesic acid;
(iii) tetracarboxylic acids, including 1,2,3,4-butanetetracarboxylic acid and pyromellitic acid;
(iv) polycarboxylic acids such as EDTA;
(v) unsaturated carboxylic acids including eth)acrylic acid, crotonic acid, isocrotonic acid, maleic acid, cinnamic acid, 2-methylmaleic acid, fumaric acid, itaconic acid, 2-methylitaconic acid, $\alpha,\beta$-methyleneglutaric acid and monoesters of unsaturated dicarboxylic acids, and the vinyl monomer is styrene optionally substituted with alkyl, hydroxyl or sulfonyl groups, or with a halogen atom, (meth)acrylonitrile, (meth)acrylamide optionally substituted with $C_1$-$C_{10}$ alkyl groups, alkyl (meth)acrylates, glycidyl (meth)acrylate, butadiene and a vinyl ester
(vi) inorganic acids such as boric acid and phosphoric acid.

In certain embodiments, the cross-linking agent is selected from the following list: primary amines (for example N-hydroxysuccinimide esters), carbonyls (such as acrylic resins), inorganic acids (such as phosphoric acid), lewis acids (for example, boric acid or aluminium chloride) and carboxylic acids.

In certain embodiments, the cross-linking agent is a carboxylic acid selected from a dicarboxylic acid, tricarboxylic acid, tetracarboxylic acid, polycarboxylic acid and unsaturated carboxylic acid. In certain embodiments, the carboxylic acid is a polycarboxylic acid such as citric acid or succinic acid. In certain embodiments, the carboxylic acid is an unsaturated carboxylic acid such as acrylic acid, methacrylic acid and maleic acid.

In certain embodiments the binder is a reaction product of polyvinyl alcohol and citric acid. Carboxylic acids are a preferred type of cross-linker because of their low toxicity and cost. Polyvinyl alcohol is also known for being nontoxic and biodegradable.

In certain embodiments, the binder is present in an amount of from about 0.1 wt.% to about 40 wt.% of the total wt.% of the granulate, or from about 1 to wt.% to about 35 wt. % of the total wt. % of the granulate, or from about 5 to wt.% to about 30 wt. % of the total wt. % of the granulate, or from about 10 to wt.% to about 25 wt. % of the total wt. % of the granulate, or from about 15 to wt.% to about 20 wt. % of the total wt. % of the granulate, or from or from about 1 to wt.% to about 5 wt. % of the total wt. % of the granulate.

In certain embodiments, the binder consists of a polymer, such that 100% by weight of the binder is polymer.

In certain embodiments, in addition to the polymer component, the binder comprises a cross-linking agent, and the weight ratio of the polymer component to cross-linking agent is from 1:1 to 3:1; or 1:1 to 3.5:1 or 1:1 to 1:4. In accordance with an embodiment, the polymer component is polyvinyl alcohol and the cross-linking agent is carboxylic acid; and the weight ratio of the polyvinyl alcohol to carboxylic acid is from 1:1 to 3:1; or 1:1 to 3.5:1 or 1:1 to 1:4.

*Method of preparing granulates*

In certain embodiments, the particles comprising at least one of the expanded milled perlite particles, the diatomaceous earth particles, and the sepiolite particles are mixed together. The binder is first dispersed in water and is sprayed onto the particles comprising at least one of the expanded milled perlite particles, the diatomaceous earth particles, and the sepiolite particles so that the particles agglomerate and form granulates. Following on from the spraying step, a curing step is performed at a temperature from 80 °C to 120 °C. The curing step is typically performed for a length of time such that the granulate has dried and the binder has cured. After the curing step is performed, the moisture content of the granulate is below about 5 wt% of the granulate, such as less than about 3 wt%, or less than about 2 wt%. The curing step is performed for a length of time that the moisture content reaches the desired level as stated above, and may take up to 12 hours, or up to 8 hours or up to 4 hours.

*Absorbent material*

According to the present invention, there is provided an absorbent material comprising the granulate as already described herein. In certain embodiments, the binder is a cross-linked binder which is a reaction product of a polymer and cross-linking agent. This type of binder is particularly strong for applications where the granulate is performing as an absorbent material and where extra hydrophobicity is required (for example, when using for oil absorption).

The present inventors have found that the absorbent material is particularly useful in methods for treating fluid spills due to the improved absorption capacity of the granulate. By the term "fluid spills" this means the unwanted release of a fluid into an environment such as oil spills (for example, spill from an oil tanker or a leak at petrol station), aqueous spills (for example, soft drinks, acid solutions and basic solutions), chemical spills (for example, organic and inorganic solvents), food spills (for example soups or sauces) and bodily fluid spills (for example, blood, urine and vomit).

In some embodiments, the absorbent material may be used in enclosed containers for the disposal of liquid toxic waste substances.

In certain embodiments, the absorbent material absorbs the fluid spill up to 100 % of the weight of the granulate, such as up to 95 %, or up to 90 % or up to 85 %, or up to 80 %, or up to 75 % or up to 70 % of the weight of the granulate.

*Animal feed composition*

In accordance with the present invention there is provided an animal feed composition comprising the granulate as described herein. In certain embodiments, the animal feed composition comprises at least one nutrient. By the term "nutrient" we mean the basic substances which animals require for maintenance, growth, reproduction and good health which include carbohydrates, proteins, fats, minerals, vitamins and water. The main source of carbohydrates in animal feed are grains such as oats, wheat, barley, corn, sorghum, forages and hay. Proteins can be of plant or animal origin such as amino acids, oil cake meals, fish meals and meat scraps. Common sources of fat include fish oils, seed-derived oils such as flaxseed oil, sunflower, canola oil and vegetable derived oils such as corn and soybean. Minerals may include elements important for sustaining healthy and productive animal growth such as sodium, calcium, phosphorus, sulphur, potassium, magnesium, manganese, iron, copper, cobalt, iodine, zinc, molybdenum and selenium. Vitamins can either be water-soluble or fat-soluble and are broadly classified as vitamin A, B, C, D, E and K.

The above list is not intended to be limiting and the skilled person is aware of the nutrients available and will be able to select and blend nutrient ingredients to provide the required nutritional diet for the animal and will depend on the species of animal.

In certain embodiments, the granulate binder for the animal feed composition is selected from polyvinyl alcohol, bentonite, sodium alginate, potassium alginate, lignosulphonate, urea-formaldehyde condensation polymer, agar, carrageenan, guar gum, cassia gum, xantham gum, cellulose, arabic gum (acacia), microcrystalline cellulose, methyl cellulose, ethyl cellulose, sorbitan monolaurate, starch or starch-based derivatives and combinations thereof, preferably wherein the binder is polyvinyl alcohol.

In certain embodiments, the animal feed consists of the granulate alone and does not comprise any additional nutrients or ingredients. The animal feed composition is therefore provided such that the granulate absorbs and carries a liquid of interest for the desired animal feed. The liquid of interest may be water, or may be any liquid nutritional animal feed. The skilled person is aware of suitable liquid nutritional animal feeds, and may select the liquid of interest depending on the animal to which it is to be fed.

In certain embodiments, the granulate absorbs the liquid of interest up to 100 % of the weight of the granulate, such as up to 95 %, or up to 90 % or up to 85 %, or up to 80 %, or up to 75 % or up to 70 % of the weight of the granulate.

In certain embodiments, the binder is present in an amount of from about 0.1 wt.% to about 40 wt.% of the total wt.% of the animal feed composition, or from about 1 to wt.% to about 35 wt. % of the total wt. % of the animal feed composition, or from about 5 to wt.% to about 30 wt. % of the total wt. % of the animal feed composition, or from about 10 to wt.% to about 25 wt. % of the total wt. % of the animal feed composition, or from about 15 to wt.% to about 20 wt. % of the total wt. % of the animal feed composition, or from or from about 1 to wt.% to about 5 wt. % of the total wt. % of the animal feed composition.

**EXAMPLES**

Example 1

The following particles were used in the testing under this example (granulated as described below or in ungranulated form):

  expanded milled perlite (EMP available from Imerys)
  Diatomaceous earth
  Binders used: polyvinyl alcohol; bentonite and lignosulfonate

500 g of the particles (either expanded milled perlite or diatomaceous earth) was placed in a mixer (Eireich mixer). 25 g of binder was dissolved in 700g water. The final % by weight of the binder was 5% by weight of the total granulate. The binder composition was then sprayed using a simple commercial sprayer on to the particles.

Table 1

| Parameters | EMP | Granulated EMP + 5% PVA (200-600 μm) | Granulated EMP + 5% PVA (600-1700 μm) | Granulated EMP + 5% Bentonite (200--600 μm) | Granulated EMP + 5% Lignosulfonate (200-600 μm) | Granulated EMP + 5% Lignosulfonate (600-2500 μm) | Expanded Perlite | DE | Granulated DE (200-600 μm) |
|---|---|---|---|---|---|---|---|---|---|
| PSD laser (d50 - μm) | 20 | 350 | 880 | 439 | 503 | 1206 | 280 | 10 | 320 |
| Absorption capacity % | 307 | 451 | 203 | 297 | 83 | 107 | 170 | 343 | 435 |
| Dust (Dustmon) | 116.3 | 7.5 | 18.5 | 26.4 | x | x | 2.8 | 57.9 | 43.7 |
| Density (g/cm3) | 0.12 | 0.24 | 0.22 | 0.21 | 0.446 | 0.545 | 0.37 | 0.16 | 0.10 |
| SSA (B.E.T. , m2/g) | 3.5 | 2 | 2.4 | 4.8 | 2.5 | 2.6 | 0.7 | 24 | 34 |
| Porosity (mercury, g/cm3) | 1.42 | 1.638 | 1.033 | x | x | x | 1.183 | 1.282 | 1.01 |
| Angle of repose ° for the dry product | No flow | 35 | 35 | 35.2 | x | 35.8 | 32 | No Flow | 30 |
| Cohesive index (granudrum , 10 rpm) | 73.4 | 4.2 | 4.1 | 27.7 | x | x | 2.11 | 69 | 2.7 |

PSD laser

The Particle Size Distribution (PSD) was determined using a Mastersizer 2000 from Malvern instruments.

$D_{50}$ is the value of the mean particle size (d50) measured by laser diffraction (standard NFX-11-666 or ISO 13320-1) and " $d_{50}^{sedi}$ " is the value of the median diameter obtained by sedimentation using a sedigraph (standard Afnor-X-11-683 or ISO 13317-3), as described above and in the Examples. Reference may be made to the article by G. Baudet and J. P. Rona, Ind. Min. Mines et Carr. Les techn. June, July 1990, pp 55-61, which shows that the lamellarity index is correlated to the mean ratio of the largest dimension of a particle to its smallest dimension.

Absorption capacity

The Westinghouse method was used to calculate the absorption capacity (based on NV V19-002). To carry out this method, the sample to be tested was introduced into a liquid via a sieving equipment. In this case, the liquid used was dioctyl adipate. The sample was then left to soak for 20 minutes, after this time the sample was removed and the excess liquid was removed. The weight of the product before and after being soaked was compared to calculate the absorption of the product.

Dust Analysis

The Dust Analyzer Dustmon RD 100 (available from Retsch®) characterizes the dustiness of powders and granulates.

DustMon RD 100 consists of a dosing control system (sample beaker with a valve and a tube, a sample collector, a light source and a detector. The sample is poured into the sample beaker. On starting the measurement, the valve opens and the sample drops down the tube into the sample collector. The dust generated in the sample collector will be measured by the detector and the resulting dust index will be displayed.

The results provide a measurements of maximum dust concentration in % (0-100 % of complete dust concentration).

Density

The bulk density of the samples was assessed by measuring the sample into a test tube and comparing the volume of the sample against the mass of the sample.

Specific Surface Area (SSA-- B.E.T m$^2$/g)

The BET specific surface area was determined using a method based on the standard NF X 11-621 titled "Determination de "aire massique (surface spécifique) des poudres par adsorption de gaz - Méthode B.E.T. - Mesure volumétrique par adsorption d'azote a basse temperature" (Determination of mass area (specific surface) of powders by gas adsorption - BET Methods - Volumetric measurement by nitrogen adsorption at low temperature).

The method made use of a Micromeritics measurement apparatus (available from Micromeritics Instrument Corp., USA) including a vacuum pump, a VacPrep 061 degassing section, a Tristar 3000S measurement section and sample holders, a Mettler AG204 scale with a precision of 0.1 mg, Dewar flasks, nitrogen adsorbant gas and helium carrier gas.

The sample was weighed (to 0.1 mg accuracy) near the empty sample holder and its mass $M_0$ was recorded in g. The previously homogenised powder sample was then introduced, using a funnel, into the sample holder. Sufficient space (dead volume) was left between the sample and the top of the sample holder to enable free circulation of gas. The sample holder was placed into one of the degassing stations and degassed at 250°C under a primary vacuum of 10 Pa for about 20 minutes. After degassing, a sufficient volume of nitrogen was added to the sample holder to avoid introducing air during transfer of the sample holder from the degassing station to the measurement station.

The sample holder was then attached to the measurement station and a Dewar flask containing liquid nitrogen was placed around the sample holder. The BET measurement was commenced using the device control software. The device then carried out the following operations automatically:

- Vacuum removal of the nitrogen introduced for the transfer of the sample holder;
- Leak test;
- Adding helium carrier gas;

- Measuring the dead volume at ambient temperature;
- Measuring the cold dead volume using liquid nitrogen;
- Helium vacuum removal;
- Leak test;
- Adding nitrogen at 950 mm Hg and measuring the saturation pressure; and
- Acquisition of analysis values.

The instrument's data acquisition and processing software plotted the transformed BET line from 5 measured adsorption points. The Dewar flask and then the sample holder were removed. The apparatus was allowed to return to ambient temperature and then the sample was again weighed (to an accuracy of 0.1 mg) near the sample holder and the weight was recorded as $M_2$ in g. The mass of the test portion of the sample, M, was calculated (in g) according to:

$$M = M_2 - M_0$$

The value M was then introduced into the software calculation program which automatically calculated the BET specific surface area of the sample in $m^2/g$.

Porosity

Porosity is the percentage of interstitial void space in a particulate. It is calculated using the following formula:

$$\Phi = V_v / V_T$$

Where $\Phi$ is the porosity, $V_v$ is the void volume and $V_T$ is the total volume.
The porosity was measured using mercury porosimetry which characterizes porosity by forcing mercury into pores. The standard test for mercury porosimetry is set out in ASTM D4404-18.

Angle of repose

The angle of repose was measured using a Manual Powder Flow Tester (EFT-01) using ISO 8398:1989. The angle of repose is calculated as follows:

$$\Theta = \tan^{-1} h/r$$

Where $\Theta$ is the angle of repose, h is the height in cm of the conical pile and r is the radius in cm.
The complementary measurement to the angle of repose is the dynamical angle of repose (or flowing angle) which is measured using a Granudrum. The GranuDrum instrument (available from GRANUTOOLS™) is an automated powder flowability measurement technique predicated on the rotating drum principle. The drum is a horizontal cylindrical with transparent sidewalls and it is half-filled with the powder sample.
The drum rotates about its axis at an angular velocity varying from 2 to 70 rpm. In this case the angular velocity was measured at 10 rpm and a CCD camera captures a number of snapshots. For the measured rotating speed, the dynamic cohesive index is measured from the interface fluctuations, and the flowing angle, also called "dynamic angle of repose" in the literature, is calculated from the average interface position. A low value of the flowing angle corresponds to excellent flowability.

Flowability

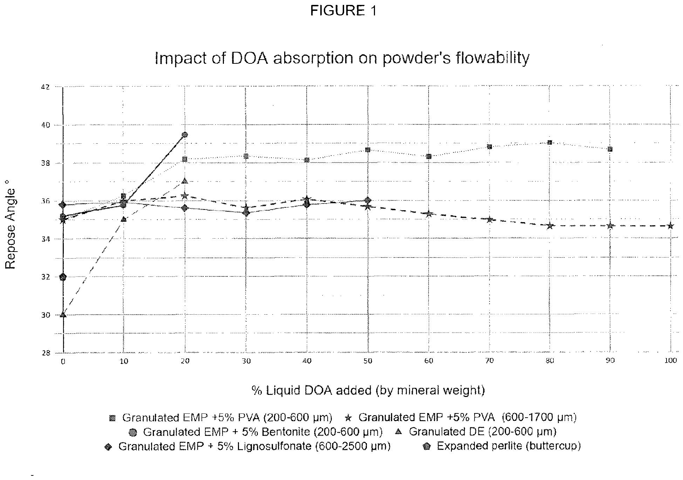

Figure 1 shows the impact of absorption on a powder's flowability. Powder flow, also known as flowability, is defined as the relative movement of a bulk of particles among neighbouring particles or along the container wall surface. In other words, powder flowability refers to the ability of a powder to flow in a desired manner in a specific piece of equipment.
Figure 1 measures the % liquid DOA against the repose angle to assess the impact of flowability. The following samples from Table 1 were tested:

Granulated EMP + 5 wt% PVA, granulate particle size 200 - 600 $\mu$m

Granulated EMP + 5 wt% PVA, granulate particle size 600 - 1700 μm
Granulated EMP + 5 wt% bentonite, granulate particle size 200 - 600 μm
Granulated DE, granulate particle size 200 - 600 μm
Granulated EMP + 5 wt% lignosulfonate, granulate particle size 600 - 2500 μm
Expanded perlite (not milled)

The data in Table 1 and Figure 1 shows that when the granulate is formed using PVA as the binder in accordance with the present invention, the powder samples achieved excellent absorption capacity (between 90 and 100%) and excellent flowability results.

The other inventive samples (3 to 5) showed lower absorption in some cases, but improved flowability over the non-granulated counterparts. Sample 6 showed no flowability at all.

lignosulphonate is shown capable of binding the EMP as well with good angle of repose for course, even though absorption is lower

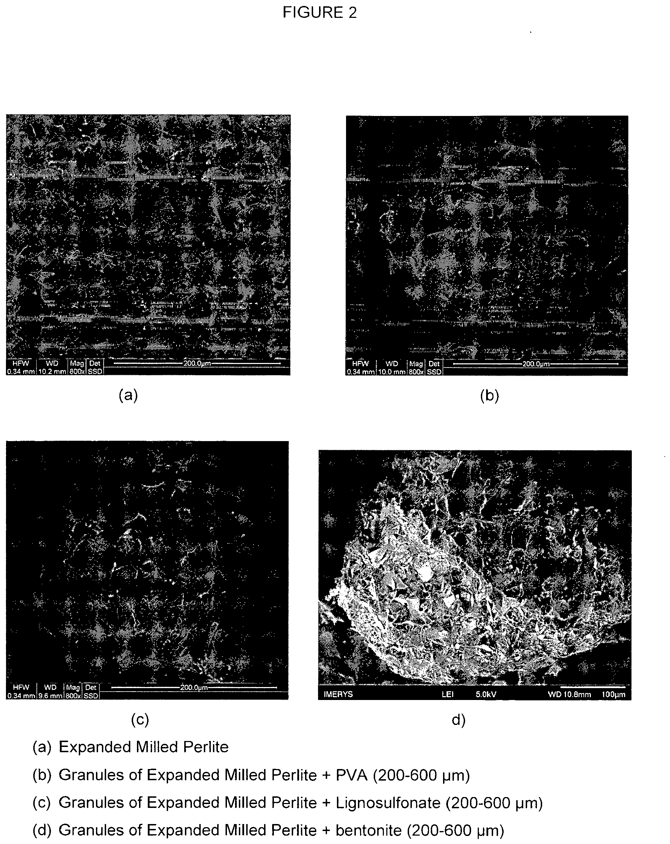

SEM images were taken for the following samples from Table 1; and are presented in Figure 2:

a) Expanded Milled Perlite
b) Granulated EMP + PVA (200-600 μm)
c) Granulated EMP + Lignosulfonate (200-600 μm)
d) Granulated EMP + bentonite (200-600 μm)

The equipment used was an SEM FEI Quanta 200 microscope. The SEM images all show proper granulation of the primary EMP particles using the various binders.

Example 2

Table 2

| Trial # | 7 | | 29 | 30 |
|---|---|---|---|---|
| binder | Poval 8-88 | Bentonite CT | Kuraray Excevl AQ-4104 | Evostick Exterior PVA |
| binder type | polyvinyl alcohol, 88% hydrolysed | mineral | polyvinyl alcohol fully hydrolysed & formulated for water resistance | PVA adhesive formulated for external use |
| binder % | 5 | 5 | 5 | 5 |
| Oil Absorption Westighouse % | 274 | 337 | 583 | 378 |
| Water Absorption Westinghouse % | disintegrated - no result recorded | disintegrated - no result recorded | 541 | 417 |

Westinghouse absorption tests were performed on various granulates prepared using expanded granulated perlite (200 - 600 μm) and with the components as set out in Table 2 above. The Westinghouse method is as described above.

**Claims**

1. A granulate comprising a binder and at least one of expanded milled perlite particles, diatomaceous earth particles, and sepiolite particles, wherein:

    i) the expanded milled perlite particles have a D50 from about 5 to about 40 microns;
    ii) the diatomaceous earth particles have a D50 from about 5 to about 40 microns;
    iii) the sepiolite particles have a D50 from about 5 to about 100 microns;
    iv) the granulate has a D50 from about 150 to about 2000 microns; and

wherein the particles are bound together by the binder forming pores between the particles.

2. The granulate according to claim 1, having:

an angle of repose up to about 38°, as measured by the angle of repose (funnel method) using the EFT-01 Powder Flow Tester;
an absorption capacity of at least 150%, as measured using the Westinghouse method described herein and utilizing dioctyladipate as the absorbate; and a dust content less than 10, as measured by the Dust analyzer DustmonRD 100.

3. The granulate according to claims 1 or 2, wherein either or both of the expanded milled perlite particles and the diatomaceous earth particles have a $D_{50}$ from about 10 to about 30 microns.

4. The granulate according to claims 1 to 3, wherein the sepiolite particles have a $D_{50}$ from about 10 to about 50 microns.

5. The granulate according to any of claims 1 to 4, wherein the granulate has a $D_{50}$ from about 200 to about 600 microns, or from about 600 to about 1700 microns.

6. The granulate according to any of claims 1 to 5, wherein the binder is either:

(i) a polymer; or
(ii) a cross-linked binder which is a reaction product of a polymer and a cross-linking agent; or
(iii) bentonite; or
(iv) lignosulphonate.

7. The granulate according to claim 6, wherein the polymer is selected from one or more of a water-soluble synthetic polymer, a natural water-soluble polymer and a polyol.

8. The granulate according to claim 6 or 7, wherein the cross-linking agent is an acid selected from one or more of the following:

(i) dicarboxylic acids, including oxalic acid, malonic acid, succinic acid, glutaric acid, adipic acid, pimelic acid. suberic acid, azelaic acid, sebacic acid, malic acid, tartaric acid, tartronic acid, aspartic acid, glutamic acid, fumaric acid, itaconic acid, maleic acid, traumatic acid, camphoric acid, phthalic acid and its derivatives that contain at least one boron or chlorine atom, tetrahydrophthalic acid and its derivatives that contain at least one chlorine atom, isophthalic acid, terephthalic acid, mesaconic acid and citraconic acid,
(ii) tricarboxylic acids, including citric acid, tricarballylic acid, 1,2,4-butanetricarboxylic acid, aconitic acid, hemimellitic acid, trimellitic acid and trimesic acid;
(iii) tetracarboxylic acids, including 1,2,3,4-butanetetracarboxylic acid and pyromellitic acid;
(iv) polycarboxylic acids such as EDTA;
(v) unsaturated carboxylic acids including eth)acrylic acid, crotonic acid, isocrotonic acid, maleic acid, cinnamic acid, 2-methylmaleic acid, fumaric acid, itaconic acid, 2-methylitaconic acid, $\alpha,\beta$-methyleneglutaric acid and monoesters of unsaturated dicarboxylic acids, and the vinyl monomer is styrene optionally substituted with alkyl, hydroxyl or sulfonyl groups, or with a halogen atom, (meth)acrylonitrile, (meth)acrylamide optionally substituted with C 1 -C 10 alkyl groups, alkyl (meth)acrylates, glycidyl (meth)acrylate, butadiene and a vinyl ester
(vi) inorganic acids such as boric acid and phosphoric acid.

9. The granulate according to claim 6, wherein the binder comprises:

(i) polyvinyl alcohol; or
(ii) a reaction product of polyvinyl alcohol and a carboxylic acid, preferably wherein the carboxylic acid is citric acid.

10. An absorbent material comprising the granulate according to any of claims 1 to 9, wherein the binder is a cross-linked binder which is a reaction product of a polymer and a cross-linking agent.

11. A method for treating fluid spills comprising applying the absorbent material as defined in claim 10 to the fluid spill so that the fluid is absorbed by the absorbent material.

**12.** An animal feed composition comprising the granulate according to any of claims 1 to 9.

**13.** The animal feed composition according to claim 12, wherein the composition further comprises at least one nutrient.

**14.** The animal feed composition according to claim 12 or claim 13, wherein the binder is selected from polyvinyl alcohol, bentonite, sodium alginate, potassium alginate, lignosuiphonate, urea-formaldehyde, agar, carrageenan, guar gum, cassia gum, xantham gum, cellulose, arabic gum (acacia), microcrystalline cellulose, methyl cellulose, ethyl cellulose, sorbitan monolaurate, starch or starch-based derivatives and combinations thereof, preferably wherein the binder is polyvinyl alcohol.

**15.** A method of preparing the granulate according to any of claims 1 to 9, comprising spray drying the milled expanded perlite particles with the binder and performing a curing step.

FIGURE 1

## Impact of DOA absorption on powder's flowability

% Liquid DOA added (by mineral weight)

■ Granulated EMP +5% PVA (200-600 μm)    ★ Granulated EMP +5% PVA  (600-1700 μm)
● Granulated EMP + 5% Bentonite (200-600 μm)   ▲ Granulated DE (200-600 μm)
◆ Granulated EMP + 5% Lignosulfonate (600-2500 μm)       ◉ Expanded perlite (buttercup)

FIGURE 2

(a)

(b)

(c)

d)

(a) Expanded Milled Perlite

(b) Granules of Expanded Milled Perlite + PVA (200-600 μm)

(c) Granules of Expanded Milled Perlite + Lignosulfonate (200-600 μm)

(d) Granules of Expanded Milled Perlite + bentonite (200-600 μm)

**EUROPEAN SEARCH REPORT**

Europäisches Patentamt
European Patent Office
Office européen des brevets

Application Number

EP 22 38 6052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 433 918 B2 (RILEY ANDREW [GB]; IMERYS MINERALS LTD [GB]) 6 September 2016 (2016-09-06) * col. 4, lines 19-20; col. 6, line 14; col 6, lines 29-30; col. 6, line 56.; claims 1,13 * | 1-10,15 | INV. B01J20/10 B01J20/12 B01J20/14 B01J20/24 B01J20/26 B01J20/28 B01J20/30 |
| X | US 2018/319670 A1 (RILEY ANDREW MARK [GB] ET AL) 8 November 2018 (2018-11-08) * paragraph [0028] – paragraph [0029]; example 4; table 5 * | 11-14 | |
| A | US 2015/190778 A1 (WANG BO [US]) 9 July 2015 (2015-07-09) * paragraph [0088] – paragraph [0089]; example 1 * | 1-15 | |
| A | US 2018/187021 A1 (WANG BO [US] ET AL) 5 July 2018 (2018-07-05) * claim 1; table 6 * | 1-15 | |
| A | US 2020/131456 A1 (DALE DOUGLAS A [US]) 30 April 2020 (2020-04-30) * paragraph [0154] * | 1-15 | TECHNICAL FIELDS SEARCHED (IPC) B01J |
| A | US 2019/270067 A1 (WANG BO [US]) 5 September 2019 (2019-09-05) * table 7 * | 1-15 | |

The present search report has been drawn up for all claims

| Place of search | Date of completion of the search | Examiner |
|---|---|---|
| The Hague | 2 January 2023 | Mc Donnell, Shane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 38 6052

This annex lists the patent family members relating to the patent documents cited in the above-mentioned European search report.
The members are as contained in the European Patent Office EDP file on
The European Patent Office is in no way liable for these particulars which are merely given for the purpose of information.

02-01-2023

| Patent document cited in search report | | Publication date | Patent family member(s) | | Publication date |
|---|---|---|---|---|---|
| US 9433918 | B2 | 06-09-2016 | GB | 2493187 A | 30-01-2013 |
| | | | US | 2014371061 A1 | 18-12-2014 |
| | | | WO | 2013014450 A1 | 31-01-2013 |
| US 2018319670 | A1 | 08-11-2018 | EP | 3374079 A1 | 19-09-2018 |
| | | | US | 2018319670 A1 | 08-11-2018 |
| | | | US | 2020283301 A1 | 10-09-2020 |
| | | | WO | 2017081031 A1 | 18-05-2017 |
| US 2015190778 | A1 | 09-07-2015 | CN | 104718021 A | 17-06-2015 |
| | | | EP | 2874740 A1 | 27-05-2015 |
| | | | ES | 2764788 T3 | 04-06-2020 |
| | | | US | 2015190778 A1 | 09-07-2015 |
| | | | US | 2017361303 A1 | 21-12-2017 |
| | | | US | 2019039044 A1 | 07-02-2019 |
| | | | WO | 2014004349 A1 | 03-01-2014 |
| US 2018187021 | A1 | 05-07-2018 | EP | 3116946 A1 | 18-01-2017 |
| | | | US | 2018187021 A1 | 05-07-2018 |
| | | | WO | 2015138901 A1 | 17-09-2015 |
| US 2020131456 | A1 | 30-04-2020 | BR | 112019027976 A2 | 07-07-2020 |
| | | | CA | 3067837 A1 | 03-01-2019 |
| | | | CN | 110809624 A | 18-02-2020 |
| | | | EP | 3645696 A1 | 06-05-2020 |
| | | | JP | 2020527339 A | 10-09-2020 |
| | | | US | 2020131456 A1 | 30-04-2020 |
| | | | WO | 2019006077 A1 | 03-01-2019 |
| US 2019270067 | A1 | 05-09-2019 | EP | 3532194 A1 | 04-09-2019 |
| | | | US | 2019270067 A1 | 05-09-2019 |
| | | | WO | 2018081688 A1 | 03-05-2018 |

EPO FORM P0459

For more details about this annex : see Official Journal of the European Patent Office, No. 12/82

**EP 4 311 599 A1**

**Patent documents cited in the description**

- US 20060075930 A